# FASCICULE DE BREVET EUROPEEN

(11) **EP 1 263 874 B1**
(45) Date de publication et mention de la délivrance du brevet: **04.05.2005**
(21) Numéro de dépôt: 01907673.6
(22) Date de dépôt: 23.01.2001
(51) Int. Cl.: C08L 23/20, C08J 3/12

(54) **COMPOSITION COLOREE COMPRENANT UN LIANT BITUMINEUX ET SES APPLICATIONS**
FARBIGE ZUSAMMENSETZUNG ENTHALTEND EIN BITUMINÖSES BINDEMITTEL UND DESSEN ANWENDUNGEN
COLOURED COMPOSITION COMPRISING A BITUMINOUS BINDER AND USES THEREOF

(30) Priorité: 24.01.2000 FR 0000843
(43) Date de publication de la demande: 11.12.2002
(73) Titulaire: TotalFinaElf France, 92800 Puteaux (FR)
(72) Inventeur: LEMOINE, Guy, F-76600 Le Havre (FR); GILLET, Jean-Philippe, F-76700 Gainneville (FR)
(74) Mandataire: Jolly, Jean-Pierre
(86) Numéro de dépôt international: PCT/FR2001/000212
(87) Numéro de publication internationale: WO 2001/053409

(56) Documents cités:
- WO-A-93/22508
- FR-A- 2 673 947
- FR-A- 2 723 101
- US-A- 4 315 842
- US-A- 4 361 663
- US-A- 4 460 724
- DATABASE WPI Section Ch, Week 198740 Derwent Publications Ltd., London, GB; Class A18, AN 1987-282029 XP002152980 & JP 62 197456 A (IDEMITSU PETROCHEM CO), 1 septembre 1987 (1987-09-01)
- DATABASE WPI Section Ch, Week 199953 Derwent Publications Ltd., London, GB; Class A17, AN 1999-615656 XP002152981 & JP 11 269314 A (NIPPON OIL CO LTD), 5 octobre 1999 (1999-10-05)

## Description

La présente invention concerne une composition colorée à haute tenue à la lumière comprenant au moins un liant bitumineux pigmentable ne contenant pas d'asphaltènes, à base de composés hydrocarbonés, incorporé en substitution de bitumes. L'invention concerne également ses applications, notamment pour la réalisation de revêtements de surface colorés, de matériaux d'étanchéité pigmentés, tels que des membranes ou chapes d'étanchéité pour toitures, pour la réalisation d'enrobés colorés pour l'industrie routière, ainsi que pour la réalisation de revêtements de protection colorés.

Il est connu, dans l'état de la technique, d'utiliser, dans la fabrication d'enrobés colorés pour la réalisation de revêtements routiers ou urbains (notamment pour des passages pour piétons, des pistes cyclables, des trottoirs, des voies piétonnes, des parkings, etc ...), des liants bitumineux à faible teneur en asphaltènes (environ 5%), donc pigmentables, en mélange avec des granulats et des pigments colorés. Ce procédé ne permet cependant pas d'obtenir toutes les teintes souhaitées.

Ces liants bitumineux sont des bitumes dits « naturels », issus du pétrole brut, des schistes bitumineux, d'huiles lourdes, de sables bitumineux, etc..., obtenus notamment par distillation et désasphaltage de la fraction lourde issue de la distillation.

On a cherché à améliorer la gamme de teintes des enrobés, par l'utilisation d'autres types de liants, appelés ci-après bitumes « synthétiques » ou « liants synthétiques clairs », ayant des caractéristiques voisines de celles d'un bitume « naturel », comme ceux divulgués dans le brevet FR 2 673 947. Ce brevet concerne un procédé de préparation d'un liant clair pétrolier exempt d'asphaltènes, consistant à fluxer un ou plusieurs polymères fortement réticulés ou de masse moléculaire élevée par un extrait aromatique d'origine pétrolière, obtenu par extraction liquide-liquide d'un distillat. Ce liant clair ou bitume synthétique permet de réaliser des enrobés colorés pour utilisation routière, mais son utilisation dans des matériaux d'étanchéité n'est pas envisagée, et le problème de sa stabilité à la lumière ne s'est donc pas posé de façon aussi critique.

Par ailleurs, il est également connu de réaliser une composition de liant ou bitume pigmentable, telle que décrite dans le brevet européen EP 179 510, qui comprend un extrait d'huile lubrifiante minérale et une résine de pétrole et/ou une résine coumarone-indène, modifiées par des groupes acide carboxylique, anhydride d'acide carboxylique ou hydroxyle. Toutefois, il a été constaté que la stabilité à la lumière des matériaux d'étanchéité colorés, tels que des membranes ou chapes de toitures, réalisés à partir de ce type de liant, comme décrit notamment dans le brevet FR 2 690 183, n'est pas satisfaisante.

On connaît, par WO 93 22508 A, une bande de marquage pour routes, comprenant une couche de base et une couche de surface, la couche de base étant constituée d'un caoutchouc butadiène et d'au moins une résine choisie parmi le groupe des résines polycyclodiéniques hydrogénées et les résines hydrocarbonées aliphatiques.

On connaît aussi, par US 4 315 842 A, une composition de type « hot melt », comprenant une résine hydrogénée obtenue par copolyménisation de cyclopentadième ou ses dérivés avec de l'indène, en mélange avec un ou plusieurs composés choisis parmi les copolymères ester-éthylène, les résines polyester et les cires.

Enfin, US 4 361 663 A, concerne une composition adhésive comprenant, en mélange dans un solvant, un bloc copolymère hydrogéné de polystyrène et de polydiène, une résine hydocarbonée de pétrole telle qu'une résine polycyclique hydrogénée et un polybutène ou polyisobutiène.

La Demanderesse a établi de façon surprenante, que le choix judicieux de constituants chimiques à base d'un composé hydrocarboné à caractère aliphatique et paraffinique marqué, évitant l'utilisation des extraits d'huile lubrifiante ou de distillats, de nature fortement aromatique, comme agent fluxant ou plastifiant des résines, et leur association avec au moins un agent structurant composé d'un polymère hydrocarboné cyclo-aliphatique, conduisent à l'obtention d'un liant bitumineux pigmentable, permettant de réaliser des compositions colorées utilisables notamment pour l'obtention de matériaux d'étanchéité bitumineux, tels que des chapes de toitures, dans une large gamme de teintes, très stables à la lumière.

D'autre part, les couches de surface de matériaux d'étanchéité, tels que les chapes de toitures, incorporant le liant bitumineux ainsi obtenu, présentent des propriétés de stabilité à la lumière comparables à celles de couches réalisées en polychlorure de vinyle (PVC) coloré.

L'invention a donc pour objet une composition colorée à haute tenue à la lumière à base d'un liant bitumineux ne contenant pas d'asphaltènes incorporé en substitution de bitumes, caractérisée en ce qu'elle comprend (1) un mélange dudit liant contenant au moins un agent plastifiant à base d'un composé hydrocarboné aliphatique dont le nombre d'atomes de carbone est supérieur ou égal à 20, au moins un agent structurant à base d'un polymère hydrocarboné cycloaliphatique choisi parmi les homopolymères de cyclopentadiène hydrogénés, et éventuellement un premier polymère compatible avec les deux agents précédents, en proportion telle que la température Bille-Anneau (TBA) dudit liant soit comprise entre 30 et 100 °C , (2) un pigment coloré, et (3) un deuxième polymère choisi dans le groupe constitué par :
- les polyoléfines telles que le polyéthylène ou le polypropylène et les copolymères d'oléfines,
- les caoutchoucs naturels ou synthétiques comme :
   - l'EPDM (éthylène-propylène-diène-monomère),
   - l'EPM (éthylène-propylène monomère),
   - le polyisobutylène,
   - le polynorbornène,
   - le polychloroprène,
- et le copolymère éthylène-acétate de vinyle.

Par agent plastifiant, on entend tout constituant chimique permettant de fluidifier et de réduire la viscosité et le module du liant obtenu.

Par agent structurant, on entend tout constituant chimique conférant des propriétés mécaniques et une cohésivité satisfaisantes audit liant.

L'agent plastifiant utilisé dans le cadre de l'invention est choisi de préférence parmi :
a) les huiles aliphatiques naturelles ou synthétiques,
b) les polymères à bas degré de polymérisation, tels que les polyoléfines.

Les huiles aliphatiques ont, en particulier, un point d'aniline supérieur ou égal à 90°C (selon la méthode ASTM D 611) et, de préférence, supérieur ou égal à 110°C.

De préférence, ces huiles aliphatiques sont choisies parmi les huiles blanches hydrogénées, contenant au moins 60 % d'atomes de carbone paraffiniques (selon la méthode ASTM D 2140).

Toutefois, d'autres types d'huiles peuvent être utilisés, notamment des huiles d'origine végétale.

L'agent plastifiant peut aussi être choisi parmi les polymères dont l'indice de viscosité (VI), selon la méthode ASTM D 2270, est supérieur ou égal à 100, et de préférence supérieur ou égal à 120.

En particulier, ce polymère peut être du type polybutène, de masse moléculaire en nombre comprise entre 900 et 2600 et de viscosité cinématique à 100°C (selon la méthode ASTM D 445) comprise entre 200 et 4600 cSt (ou mm²/s).

L'agent structurant utilisé dans le cadre de l'invention est une résine thermoplastique polycycloaliphatique, par exemple du type homopolymères de cyclopentadième hydrogénés, à faible masse moléculaire.

Plus particulièrement, la résine hydrocarbonée du type des polycyclopentanes a un point de ramollissement (ou température Bille-Anneau, TBA, selon la norme NF T 66-008) supérieur à 125 °C, et un indice de couleur Gardner (selon la norme NF T 20-030) égal au maximum à 1.

Le rapport en poids entre l'agent structurant et l'agent plastifiant, selon l'invention, est compris entre 0,5 et 1,5.

Selon l'invention, l'agent plastifiant est utilisé en une quantité comprise entre 40 et 60 % en poids du liant bitumineux.

Le liant bitumineux, tel que défini ci-dessus, présente une pénétrabilité à 25°C comprise entre 20 et 300 dixièmes de mm (selon la norme NF T 66-004).

Le liant bitumineux selon l'invention peut contenir en outre des copolymères du type éthylène-acétate de vinyle (EVA) ou polyéthylène basse densité. L'incorporation de ces polymères s'avère utile pour durcir les bitumes, diminuer les valeurs de pénétrabilité , renforcer la cohésion et limiter le vieillissement .

De préférence, le deuxième polymère défini ci-dessus est du type EPDM (éthylène-propylène-diène-monomère), utilisé en une quantité comprise entre environ 10 % et 15 % en poids du liant bitumineux, ledit polymère étant greffé et réticulé in situ dans celui-ci par l'intermédiaire d'un complexe formé par un donneur de soufre et un composé organique du silicium tel qu'un silane ; en particulier, le silane et le donneur de soufre sont introduits aux taux respectifs de 1 à 3% et 0,2 à 0,5% en poids du mélange liant bitumineux-polymère.

D'autres polymères, parmi ceux cités ci-dessus, peuvent également être utilisés de façon avantageuse, en particulier les polypropylènes atactiques, à des taux pouvant atteindre 25% en poids de la composition.

Un autre objet de l'invention concerne l'application de la composition colorée qui vient d'être définie à la réalisation de membranes ou de chapes d'étanchéité colorées, comprenant au moins une couche, caractérisée en ce que cette couche présente après réticulation une température Bille-Anneau TBA supérieure à 160°C et, de préférence, supérieure à 190°C.

Dans un mode de réalisation particulier, la membrane d'étanchéité comprend une couche support et une couche de surface qui est composée de la composition colorée selon l'invention ; la membrane d'étanchéité peut comporter une couche support à base de bitume ou d'un mélange bitume-polymères, pourvue d'une armature.

On constate que cette couche de surface présente, après réticulation, une tenue à la lumière comparable à celle de certains revêtements polymériques tels que des plastisols de polychlorure de vinyle (PVC) colorés.

Dans le cas d'une membrane d'étanchéité ayant au moins deux couches, la couche de surface est fixée à la couche support ou de base de la membrane d'étanchéité par tout procédé de complexage, à température contrôlée, notamment par extrusion-calandrage, par enduction, ou par coextrusion. Cette couche de surface peut présenter une épaisseur comprise entre environ 100 et 500µ.

Un autre objet de l'invention consiste en l'application de la composition colorée selon l'invention, en mélange avec éventuellement des charges minérales, à la réalisation d'enrobés ou d'asphaltes colorés stables à la lumière, destinés à des revêtements routiers ou urbains.

Un dernier objet de l'invention consiste en l'application de cette composition colorée à la réalisation de revêtements de protection colorés stables à la lumière.

Les exemples suivants visent à illustrer l'invention. Ils n'ont pas de caractère limitatif.

### Exemple 1

Cet exemple concerne une première composition de liant bitumineux selon l'invention, qui comprend :
- 48,2% en poids, comme agent plastifiant, d'un polybutène de masse moléculaire en nombre de 1340, et de viscosité cinématique à 100°C (selon la méthode ASTM D 445) de 635 à 690 mm²/s (635 à 690 cSt), vendu sous la marque « Indopol H-300», par la société Amoco, et
- 51,8 % en poids, comme agent structurant, d'une résine hydrocarbonée cyclo-aliphatique saturée, ayant un point de ramollissement ou température Bille-Anneau (TBA) de 140 °C, une masse moléculaire en nombre de 400, et un indice de couleur Gardner (selon la norme NF T 20-030) de 1, vendue sous la marque « Escorez 5340 », par la société Exxon.

Le rapport en poids entre l'agent structurant (résine) et l'agent plastifiant est, dans ce cas, de 1,075, mais il peut varier entre 0,5 et 1,5 .

La préparation du mélange s'effectue avec un mélangeur Rayneri, à 150 °C, pendant environ 1 heure, jusqu'à l'obtention d'un mélange homogène.

### Exemple 2

Un deuxième exemple de composition de liant bitumineux selon l'invention comporte :
- 59,5% en poids, comme agent plastifiant, d'un polybutène de masse moléculaire en nombre de 2600, et de viscosité cinématique à 100°C (selon la méthode ASTM D 445) de 4300 mm²/s (4300 cSt), vendu sous la marque « Dynapak H-2000 » par la société Pakhoed, et
- 40,5 % en poids, comme agent structurant, de la même résine hydrocarbonée cyclo-aliphatique saturée, vendue sous la marque « Escorez 5340 », par la société Exxon.

Le rapport en poids entre l'agent structurant (résine) et l'agent plastifiant est, dans ce cas, de 0,68.

L'obtention du mélange est réalisée dans les mêmes conditions que ci-dessus.

### Exemple 3

Cet exemple concerne la réalisation d'une composition colorée obtenue par mélange du liant bitumineux de l'Exemple 1 et d'un polymère du type EPDM .
La formule du mélange est la suivante , en % en poids:
- Agent structurant, résine « Escorez 5340 » : 44,
- Agent plastifiant, polybutène « Indopol H-300» : 41,
- EPDM « Vistalon 7000 » de Exxon : 12,
- Pâte pigmentaire : 3,
L'EPDM a les caractéristiques suivantes :
- taux d'éthylène, en poids : 73 %,
- taux de diène, en poids : 5 %,
- viscosité Mooney, Ml(1+4), à125°C : 59.

Les constituants sont mélangés à l'aide d'un mélangeur à très haut taux de cisaillement, de type « Ultra Turrax », à une température initiale de 180°C, pendant 2 heures, jusqu'à l'obtention d'un mélange homogène.

Les réactions de greffage et de réticulation sont réalisées en ajoutant à 96,5 % en poids du mélange précédent, 3% en poids d'un polyorganosiloxane, et 0,5 % en poids d'un composé soufré, qui est une dithiomorpholine. Le mélangeage est poursuivi pendant 30 mn à 190 °C. Le suivi de la réticulation est réalisé en mesurant à intervalles réguliers la température bille-anneau (TBA) du mélange et l'on constate l'évolution suivante :

| | | | |
|---|---|---|---|
| Temps, en jours | 0 | 6 | 10 |
| TBA, en °C | 107 | 137 | 160 |

La réticulation du mélange a été accélérée par immersion dans de l'eau à température ambiante pendant un mois.

La tenue à la lumière du mélange a été étudiée de la manière suivante :
1) Le mélange a été soumis à un test de vieillissement en étuve avec une lampe fournissant une lumière artificielle représentant la lumière du jour (puissance de la lampe : 528W/m²), à 35 °C, pendant 183 heures. Ce test est intervenu après immersion du mélange dans l'eau à température ambiante pendant un mois, et on peut donc considérer que la réticulation était quasiment achevée et que ce test simule le comportement des matériaux après mise en oeuvre et application.
2) Le mélange après greffage, mais avant réticulation, a été soumis à un test de vieillissement au rayonnement ultra-violet (puissance du rayonnement : 2KW/m²), à 20°C, pendant 1500 heures, à l'aide du Global UV test.

L'évaluation de la couleur des échantillons et des témoins (laines et PVC), à l'aide d'un chromamètre Minolta CR-300, a donné les résultats rassemblés dans le Tableau 1 ci-après :

**Tableau 1**

| Test Vieillissement | Echantillon | ΔE (écart de couleur) | ΔL (écart de clarté) | Δa vert→rouge | Δb bleu→jaune |
|---|---|---|---|---|---|
| Lumière du jour | Liant bitumineux/EPDM | + 6,90 | +4,40 | -1,50 | -5,10 |
| Lumière du jour | Laine 6* | +7,34 | +1,62 | -1,18 | +7,07 |
| Lumière du jour | Laine 7* | +1,69 | +1,13 | -0,99 | +0,78 |
| UV | Liant Bitumineux/EPDM | +4,22 | -0,75 | -1,69 | +3,8 |
| UV | PVC blanc | +3,41 | -0,41 | +0,24 | +3,38 |

| | | | | | |
|---|---|---|---|---|---|
| * Les laines 6 et 7 sont des échantillons témoins de mesure de la stabilité à la lumière, selon les normes BS EN 20 105, BS 1 006 et ISO 105 (le chiffre varie de 1 à 8, en fonction d'une stabilité croissante à la lumière). | | | | | |

La stabilité à la lumière des compositions colorées comprenant des mélanges liant bitumineux/EPDM conformes à l'invention est bonne.

Sous l'effet d'une lumière naturelle, l'intensité de la variation de couleur de la composition colorée comprenant le mélange liant bitumineux/EPDM, après réticulation, est comparable à celle d'une laine 6.

On constate également que les mélanges liant bitumineux/EPDM, soumis au rayonnement UV, ont une stabilité à la lumière comparable à celle de l'échantillon témoin de PVC.

## Revendications

1. Composition colorée à haute tenue à la lumière à base d'un liant bitumineux ne contenant pas d'asphaltènes incorporé en substitution de bitumes, **caractérisée en ce qu'**elle comprend (1) un mélange dudit liant contenant au moins un agent plastifiant à base d'un composé hydrocarboné aliphatique dont le nombre d'atomes de carbone est supérieur ou égal à 20, au moins un agent structurant à base d'un polymère hydrocarboné cycloaliphatique choisi parmi les homopolymères de cyclopentadiène hydrogénés, et éventuellement un premier polymère compatible avec les deux agents précédents, en proportion telle que la température Bille-Anneau (TBA) dudit liant soit comprise entre 30 et 100 °C , (2) un pigment coloré, et (3) un deuxième polymère choisi dans le groupe constitué par :
- les polyoléfines telles que le polyéthylène ou le polypropylène et les copolymères d'oléfines,
- les caoutchoucs naturels ou synthétiques comme :
• l'EPDM (éthylène-propylène-diène-monomère),
• l'EPM (éthylène-propylène monomère),
• le polyisobutylène,
• le polynorbornène,
• le polychloroprène,
- et le copolymère éthylène-acétate de vinyle

2. Composition colorée selon la revendication 1, **caractérisée en ce que** l'agent plastifiant est choisi parmi :
- les huiles aliphatiques naturelles ou synthétiques,
- les polymères à bas degré de polymérisation, tels que les polyoléfines.

3. Composition colorée selon la revendication 2, **caractérisée en ce que** les huiles aliphatiques ont un point d'aniline supérieur ou égal à 90°C (selon la méthode ASTM D 611), et de préférence supérieur ou égal à 110°C.

4. Composition colorée selon la revendication 3, **caractérisée en ce que** les huiles aliphatiques sont choisies parmi les huiles blanches hydrogénées, contenant au moins 60 % d'atomes de carbone paraffiniques (selon la méthode ASTM D 2140).

5. Composition colorée selon l'une des revendications 1 et 2, **caractérisée en ce que** l'agent plastifiant est un polymère dont l'indice de viscosité (VI), selon la méthode ASTM D 2270, est supérieur ou égal à 100 et, de préférence, supérieur ou égal à 120.

6. Composition colorée selon la revendication 5, **caractérisée en ce que** le polymère est du type polybutène, de masse moléculaire en nombre comprise entre 900 et 2600 et de viscosité cinématique à 100°C (selon la méthode ASTM D 445) comprise entre 200 et 4600 mm²/s (entre 200 et 4600 cSt).

7. Composition colorée selon la revendication 1, **caractérisée en ce que** l'agent structurant est une résine thermoplastique polycycloaliphatique, à faible masse moléculaire.

8. Composition colorée selon la revendication 7, **caractérisée en ce que** la résine thermoplastique du type des polycyclopentanes a un point de ramollissement (température Bille-Anneau) supérieur à 125 °C, et un indice de couleur Gardner (selon la norme NF T 20-030) égal au maximum à 1.

9. Composition colorée selon l'une des revendications 1 à 8, **caractérisée en ce que** le rapport en poids entre l'agent structurant et l'agent plastifiant est compris entre 0,5 et 1,5.

10. Composition colorée selon la revendication 9, **caractérisée en ce que** l'agent plastifiant est utilisé en une quantité comprise entre 40 et 60 % en poids dudit liant.

11. Composition colorée selon l'une des revendications précédentes, **caractérisée en ce qu'**elle présente une pénétrabilité comprise entre 20 et 300 dixièmes de mm (selon la norme NF T 66-004).

12. Composition colorée selon l'une des revendications précédentes, **caractérisée en ce qu'**elle contient en outre des copolymères du type éthylène-acétate de vinyle (EVA) ou polyéthylène basse densité.

13. Composition colorée selon l'une des revendications précédentes **caractérisée en ce que** le deuxième polymère est une EPDM utilisé en une quantité comprise entre environ 10 % et 15 % en poids du liant bitumineux, et qui est greffé et réticulé in situ dans celui-ci par l'intermédiaire d'un complexe formé par un donneur de soufre et un composé organique du silicium tel qu'un silane.

14. Composition colorée selon la revendication 13, **caractérisée en ce que** le silane et le donneur de soufre sont utilisés en des quantités représentant respectivement entre 1 et 3% et 0,2 et 0,5% en poids du mélange liant bitumineux-polymère.

15. Application de la composition colorée selon l'une des revendications 1 à 14 à la réalisation de membranes ou de chapes d'étanchéité colorées, comprenant au moins une couche, **caractérisée en ce que** cette couche présente, après réticulation, une température Bille-Anneau TBA supérieure à 160°C et, de préférence, supérieure à 190°C.

16. Application de la composition colorée selon l'une des revendications 1 à 14 à la réalisation de membranes ou de chapes d'étanchéité colorées, comprenant une couche support et une couche de surface constituée de ladite composition colorée, **caractérisée en ce que** cette couche de surface présente, après réticulation, une température Bille-Anneau TBA supérieure à 160°C et, de préférence, supérieure à 190°C.

17. Application selon la revendication 16, **caractérisée en ce que** la couche de surface est fixée à la feuille de base de la membrane d'étanchéité par extrusion-calandrage.

18. Application de la composition colorée selon l'une des revendications 1 à 14, en mélange avec éventuellement d'autres charges minérales, à la réalisation d'enrobés ou d'asphaltes colorés stables à la lumière, destinés à des revêtements routiers ou urbains.

19. Application de la composition colorée selon l'une des revendications 1 à 14 à la réalisation de revêtements colorés stables à la lumière.

## Patentansprüche

1. Gefärbte Zusammensetzung mit hoher Lichtbeständigkeit auf Basis eines bituminösen Bindemittels, das keine Asphaltene zur Substitution von Bitumen eingeschlossen enthält, **dadurch gekennzeichnet, dass** sie (1) eine Mischung des besagten Bindemittels, die mindestens ein Plastifizierungsmittel auf Basis einer aliphatischen Kohlenwasserstoffverbindung, deren Kohlenstoffatomzahl mehr oder gleich 20 ist, mindestens ein Strukturmittel auf Basis eines cycloaliphatischen Kohlenwasserstoffpolymers, ausgewählt unter den Homopolymeren von hydriertem Cyclopentadien, und gegebenenfalls ein erstes Polymer, das mit den beiden vorgenannten Mitteln kompatibel ist, in einem solchen Verhältnis enthält, dass die Kugel/Ring-Temperatur (TBA) des besagten Bindemittels im Bereich von 30° bis 100° C liegt, (2) ein Farbpigment, und (3) ein zweites Polymer umfasst, welches ausgewählt wird aus der Gruppe, die aus
- Polyolefinen, wie Polyethylen oder Polypropylen, und Olefin-Copolymeren,
- natürlichen oder synthetischen Kautschuken, wie:
• EPDM (Ethylen/Propylen/Dien-Monomer),
• EPM (Ethylen/Propylen-Monomer),
• Polyisobutylen,
• Polynorbornen,
• Polychloropen,
- und den Copolymeren von Ethylen-Vinylacetat
besteht.

2. Gefärbte Zusammensetzung gemäß Anspruch 1, **dadurch gekennzeichnet, dass** das Plastifizierungsmittel ausgewählt ist aus
- natürlichen oder synthetischen aliphatischen Ölen,
- Polymeren mit niedrigem Polymerisationsgrad, wie Polyefinen.

3. Gefärbte Zusammensetzung gemäß Anspruch 2, **dadurch gekennzeichnet, dass** die aliphatischen Öle einen Anilinpunkt von mehr als oder gleich 90°C (gemäß der Methode ASTM D 611), und vorzugsweise von mehr als oder gleich 110°C aufweisen.

4. Gefärbte Zusammensetzung gemäß Anspruch 3, **dadurch gekennzeichnet, dass** die aliphatischen Öle ausgewählt sind aus hydrierten Weißölen, enthaltend mindestens 60% paraffinische Kohlenstoffatome (gemäß der Methode ASTM D 2140)

5. Gefärbte Zusammensetzung gemäß einem der Ansprüche 1 und 2, **dadurch gekennzeichnet, dass** das Plastifizierungsmittel ein Polymer ist, dessen Viskositätsindex (VI) gemäß der Methode ASTM D 2270 mehr als oder gleich 100 und vorzugsweise mehr als oder gleich 120 ist.

6. Gefärbte Zusammensetzung gemäß Anspruch 5, **dadurch gekennzeichnet, dass** das Polymer vom Typ eines Polybutens ist, von einer zahlenmäßigen Molekularmasse von 900 bis 2600 und einer kinematischen Viskosität bei 100° C (gemäß der Methode ASTM D 445) von 200 bis 4600 mm²/s (von 200 bis 4600 cSt).

7. Gefärbte Zusammensetzung gemäß Anspruch 1, **dadurch gekennzeichnet, dass** das Stukturmittel ein Polycycloaliphatisches, thermoplastisches Harz mit geringem Molekulargewicht ist.

8. Gefärbte Zusammensetzung gemäß Anspruch 7, **dadurch gekennzeichnet, dass** das thermoplastische Harz vom Polycyclopentan-Typ einen Erweichungspunkt (Kugel/Ring-Temperatur) von mehr als 125° C und einen Gardner-Farbindex (gemäß der Norm NF T 20-030) von gleich oder maximal 1 aufweist.

9. Gefärbte Zusammensetzung gemäß einem der Ansprüche 1 bis 8, **dadurch gekennzeichnet, dass** das Gewichtsverhältnis zwischen dem Strukturmittel und dem Plastifizierungsmittel im Bereich von 0,5 bis 1,5 liegt.

10. Gefärbte Zusammensetzung gemäß Anspruch 9, **dadurch gekennzeichnet, dass** das Plastifizierungsmittel in einer Menge im Bereich von 40 bis 60 Gewichts-% des besagten Bindemittels verwendet wird.

11. Gefärbte Zusammensetzung gemäß einem der vorangehenden Ansprüche, **dadurch gekennzeichnet, dass** sie eine Durchdringbarkeit (gemäß der Norm NT T 66-004) im Bereich von 20 bis 300 Zehntel mm aufweist.

12. Gefärbte Zusammensetzung gemäß einem der vorangehenden Ansprüche, **dadurch gekennzeichnet, dass** sie zusätzlich Copolymere vom Typ eines Ethylen-Vinylacetats (EVA) oder eines Polyethylens niedriger Dichte enthält.

13. Gefärbte Zusammensetzung gemäß einem der vorangehenden Ansprüche, **dadurch gekennzeichnet, dass** das zweite Polymer ein EPDM ist, das in einer Menge von ungefähr 10 bis 15 Gewichts-% des bituminösen Bindemittels verwendet wird, und welches in situ in diesem durch die Zwischenschaltung eines Komplexes gepfropft und vernetzt wurde, der durch einen Schwefeldonor und eine organische Siliziumverbindung wie einem Silan gebildet ist.

14. Gefärbte Zusammensetzung gemäß Anspruch 13, **dadurch gekennzeichnet, dass** das Silan und der Schwefeldonor in Mengen verwendet werden, die jeweils 1 bis 3 Gewichts-% bzw. 0,2 bis 0,5 Gewichts-% der Bitumenbindemittel/Polymermischung entsprechen.

15. Verwendung der gefärbten Zusammensetzung gemäß einem der Ansprüche 1 bis 14 zur Herstellung von gefärbten Membranen oder Dichtungsabdeckungen, umfassend mindestens eine Lage, **dadurch gekennzeichnet, dass** diese Lage nach der Vernetzung eine Kugel/Ring-Temperatur TBA von mehr als 160°C und vorzugsweise von mehr als 190°C aufweist.

16. Verwendung der gefärbten Zusammensetzung gemäß einem der Ansprüche 1 bis 14 zur der Herstellung von gefärbten Membranen oder Dichtungsabdeckungen, umfassend eine Trägerlage und eine Oberflächenlage, die aus der besagten gefärbten Zusammensetzung aufgebaut ist, **dadurch gekennzeichnet, dass** diese Oberflächenlage nach der Vernetzung eine Kugel/Ring-Temperatur TBA von mehr als 160°C und vorzugsweise von mehr als 190°C aufweist.

17. Verwendung gemäß Anspruch 16, **dadurch gekennzeichnet, dass** die Oberflächenlage mittels Extrusions-Kalandrierung an die Grundschicht der Dichtungsmembran befestigt ist.

18. Verwendung der gefärbten Zusammensetzung gemäß einem der Ansprüche 1 bis 14 in Mischung mit gegebenenfalls weiteren mineralischen Zusätzen zur Herstellung von lichtstabilen, gefärbten Mischgütern oder Asphalten, die für Beläge von Straßen oder Städten bestimmt sind.

19. Verwendung der gefärbten Zusammensetzung gemäß einem der Ansprüche 1 bis 14 zur Herstellung von lichtstabilen, gefärbten Belägen.

## Claims

1. A coloured composition with high light stability based on a non-asphaltene-containing bituminous binder incorporated as a replacement for bitumens, **characterised in that** it comprises (1) a mixture of said binder containing at least one plasticizer based on an aliphatic hydrocarbon compound with a number of carbon atoms greater than or equal to 20, at least one texturing agent based on a cycloaliphatic hydrocarbon polymer selected from among hydrogenated cyclopentadiene homopolymers, and optionally a first polymer compatible with the two preceding agents, in a proportion such that the ball and ring temperature of said binder is between 30 and 100°C, (2) a coloured pigment, and (3) a second polymer selected from the group consisting of:
- polyolefins such as polyethylene or polypropylene and olefin copolymers,
- natural or synthetic rubbers such as:
• EPDM (ethylene propylene diene monomer),
• EPM (ethylene propylene monomer),
• polyisobutylene,
• polynorbornene,
• polychloroprene,
- and ethylene/vinyl acetate copolymer.

2. A coloured composition according to claim 1, **characterised in that** the plasticizer is selected from among:
- natural or synthetic aliphatic oils,
- polymers exhibiting a low degree of polymerisation, such as polyolefins.

3. A coloured composition according to claim 2, **characterised in that** the aliphatic oils have an aniline point greater than or equal to 90°C (according to the method of ASTM D 611), and preferably greater than or equal to 110°C.

4. A coloured composition according to claim 3, **characterised in that** the aliphatic oils are selected from among hydrogenated white mineral oils, containing at least 60% of paraffinic carbon atoms (according to the method of ASTM D 2140).

5. A coloured composition according to either one of claims 1 and 2, **characterised in that** the plasticizer is a polymer whose viscosity index (VI), according to the method of ASTM D 2270, is greater than or equal to 100 and, preferably, greater than or equal to 120.

6. A coloured composition according to claim 5, **characterised in that** the polymer is of the polybutene type, of a number average molecular weight of between 900 and 2600 and a kinematic viscosity at 100°C (according to the method of ASTM D 455) of between 200 and 4600 mm²/s (between 200 and 4600 cSt).

7. A coloured composition according to claim 1, **characterised in that** the texturing agent is a polycycloaliphatic thermoplastic resin of low molecular weight.

8. A coloured composition according to claim 7, **characterised in that** the thermoplastic resin of the polycyclopentane type has a softening point (ball and ring temperature) greater than 125°C, and a Gardner colour value (to standard NF T 20-030) of at most 1.

9. A coloured composition according to any one of claims 1 to 8, **characterised in that** the weight ratio between the texturing agent and the plasticiser is between 0.5 and 1.5.

10. A coloured composition according to claim 9, **characterised in that** the plasticizer is used in an amount of between 40 and 60% by weight of said binder.

11. A coloured composition according to any one of the preceding claims, **characterised in that** it displays a penetrability of between 20 and 300 tenths of a mm (to standard NF T 66-004).

12. A coloured composition according to any one of the preceding claims, **characterised in that** it further contains copolymers of the ethylene/vinyl acetate (EVA) or low density polyethylene type.

13. A coloured composition according to any one of the preceding claims, **characterised in that** the second polymer is an EPDM used in an amount of between approximately 10% and 15% by weight of the bituminous binder, and which is grafted and cross-linked in situ therein through the intermediary of a complex formed by a sulfur donor and an organic silicon compound such as a silane.

14. A coloured composition according to claim 13, **characterised in that** the silane and the sulfur donor are used in amounts representing respectively between 1 and 3% and 0.2 and 0.5% by weight of the bituminous binder/polymer mixture.

15. Use of the coloured composition according to any one of claims 1 to 14 to produce coloured waterproof membranes or screeds, comprising at least one layer, **characterised in that** said layer exhibits, after cross-linking, a ball and ring temperature greater than 160°C and, preferably greater than 190°C.

16. Use of the coloured composition according to any one of claims 1 to 14 to produce coloured waterproof membranes or screeds, comprising a backing layer and a surface layer consisting of said coloured composition, **characterised in that** said surface layer exhibits, after cross-linking, a ball and ring temperature greater than 160°C and, preferably greater than 190°C.

17. Use according to claim 16, **characterised in that** the surface layer is fixed to the base sheet of the waterproof membrane by extrusion/calendering.

18. Use of the coloured composition according to any one of claims 1 to 14, in a mixture optionally with other inorganic fillers, to produce light-stable coloured paving mixes or asphalts designed for road or urban surfaces.

19. Use of the coloured composition according to any one of claims 1 to 14 to produce light-stable coloured surfacings.
